(19) Europäisches Patentamt
European Patent Office
Office européen des brevets

(11) Veröffentlichungsnummer: **0 355 758 B1**

(12) **EUROPÄISCHE PATENTSCHRIFT**

(45) Veröffentlichungstag der Patentschrift :
**11.11.92 Patentblatt 92/46**

(51) Int. Cl.⁵ : **H01S 3/03,** H01S 3/08,
H01S 3/097, H01S 3/23,
H01S 3/07, H01S 3/06

(21) Anmeldenummer : **89115337.1**

(22) Anmeldetag : **19.08.89**

(54) **Wellenleiteranordnung.**

(30) Priorität : **26.08.88 DE 3828951**

(43) Veröffentlichungstag der Anmeldung :
**28.02.90 Patentblatt 90/09**

(45) Bekanntmachung des Hinweises auf die
Patenterteilung :
**11.11.92 Patentblatt 92/46**

(84) Benannte Vertragsstaaten :
**DE FR GB IT**

(56) Entgegenhaltungen :
**EP-A- 0 292 277**
**WO-A-81/02955**
**DE-A- 2 608 830**
**US-A- 3 379 988**
**US-A- 4 719 639**

(73) Patentinhaber : **DEUTSCHE**
**FORSCHUNGSANSTALT FÜR LUFT- UND**
**RAUMFAHRT e.V.**
**W-5300 Bonn (DE)**

(72) Erfinder : **Opower, Hans, Dr.**
**Sperberweg 13**
**W-8033 Krailling (DE)**

(74) Vertreter : **Hoeger, Stellrecht & Partner**
**Uhlandstrasse 14 c**
**W-7000 Stuttgart 1 (DE)**

## Beschreibung

Die Erfindung betrifft eine Wellenleiteranordnung für ein hochfrequenzangeregtes, diffusionsgekühltes Gaslasersystem mit einem Wellenleiterträger, welcher einen bezogen auf eine Längsachse in Azimutalrichtung ringähnlich geschlossenen sowie sich in Richtung der Längsachse erstreckenden Hohlraum aufweist, mit einem in dem Hohlraum angeordneten Laserstrahlung längs einer optischen Achse führenden Wellenleiter, gebildet durch in konstantem Abstand voneinander angeordnete Wellenleiterwandflächen, deren Breite quer zu einer in Richtung der optischen Achse verlaufenden Längserstreckung des Wellenleiters ein Vielfaches ihres Abstandes beträgt und die einen Entladungsraum zwischen sich einschließen.

Aus der DE-PS 26 08 830 sowie der DE-PS 27 35 299 sind elektrisch angeregte Laser bekannt, bei welchen der Entladungsraum zwischen den Wandflächen eines Wellenleiters eingeschlossen ist. Diese Wandflächen des Wellenleiters sind Mantelflächen zweier konzentrischer Zylinder. Die Längserstreckung des Wellenleiters verläuft dabei in Richtung einer Zylinderachse, so daß jeweils an beiden Stirnflächen des zylindrischen Wellenleiters Spiegel eines Resonators angeordnet sind.

Eine derartige Wellenleiteranordnung hat den Nachteil, daß in der Regel eine Vielzahl von optisch nicht zusammenhängenden Laserbereichen auftritt, welche insbesondere quer zur optischen Achse, d.h. also in Azimutalrichtung voneinander entkoppelt sind, so daß kein einheitlicher Lasermode zur Verfügung steht, was für einen sinnvollen Einsatz eines derartigen Lasers erforderlich ist. Andererseits ist man stets bestrebt, bei derartigen hochfrequenzangeregten, diffusionsgekühlten Gaslasern nach Möglichkeiten zu suchen, die Wellenleiterwandflächen möglichst groß zu machen, um ein möglichst großes Entladungsraumvolumen zur Verfügung zu haben, da hinsichtlich des Abstandes der Wellenleiterwandflächen nur geringe Variationsmöglichkeiten bestehen.

Auch eine grundsätzlich mögliche Vergrößerung der Wellenleiterwandflächen in alle denkbaren Richtungen stößt auf Probleme, da entweder quer zur Längserstreckung des Wellenleiters Strahlung auftreten kann, die zu unerwünschten Verlusten führt oder die Wellenleiteranordnung sehr lang wird, so daß sie für den praktischen Einsatz unhandlich ist.

Der Erfindung liegt daher die Aufgabe zugrunde, eine Wellenleiteranordnung der gattungsgemäßen Art derart zu verbessern, daß diese bei einer möglichst günstigen Wellenleitergeometrie, d.h. nicht allzu großer Breite, noch handlich ist und in einem einheitlichen Mode betrieben werden kann.

Diese Aufgabe wird bei einer Wellenleiteranordnung der eingangs beschriebenen Art erfindungsgemäß dadurch gelöst, daß der Wellenleiter in dem Hohlraum so angeordnet ist, daß seine Längserstreckung mit der Azimutalrichtung einen Winkel von $\leq 30°$ einschließt.

Der Kern der vorliegenden Erfindung ist somit darin zu sehen, im Gegensatz zum Stand der Technik die Längserstreckung des Wellenleiters nicht so zu wählen, daß sie parallel zur Längsachse oder Zylinderachse verläuft, sondern daß sie möglichst im wesentlichen in Azimutalrichtung verläuft, so daß bei der Erfindung die optische Achse ebenfalls in Azimutalrichtung und somit gekrümmt verläuft, beispielsweise längs einer Kreisbahn oder einer wendelförmigen Bahn.

Noch vorteilhafter ist es, wenn die Längserstreckung mit der Azimutalrichtung einen Winkel von 15° einschließt und besonders bevorzugt sind Werte dieses Winkels von 5°.

Ein trotz seines einfachen Aufbaus günstiges Ausführungsbeispiel sieht vor, daß der Wellenleiter mit seiner Längserstreckung im wesentlichen parallel zur Azimutalrichtung verläuft.

Alternativ dazu hat es sich, insbesondere dann, wenn man einen Wellenleiter mit nicht allzu großer Breite wählt, als vorteilhaft erwiesen, wenn der Wellenleiter sich spiralförmig in Richtung der Längsachse windet. Damit kann man einerseits einen Wellenleiter herstellen, dessen Mode von der Breite des Wellenleiters her beherrschbar ist und der eine sehr große Länge hat, während andererseits durch die spiralförmige Windung sichergestellt ist, daß die erfindungsgemäße Wellenanordnung noch handlich bleibt.

Um eine optimale Flächenausnutzung mit einem derart spiralförmig gewundenen Wellenleiter zu erhalten, ist es günstig, wenn aufeinanderfolgende Windungen des Wellenleiters mit ihren einander zugewandten Seitenkanten nahe beieinanderliegen, wobei gegebenenfalls zwischen den Seitenkanten noch ein geringer Abstand verbleiben kann. Eine optimale Ausnützung ist jedoch dann erreicht, wenn die aufeinanderfolgenden Windungen des Wellenleiters mit ihren einander zugewandten Seitenkanten aneinander anliegen.

Hinsichtlich der Ausbildung des Hohlraums sind alle denkbaren Formen möglich. So wäre es beispielsweise möglich, den Hohlraum in Form eines Kegelmantels oder Kegelstumpfmantels mit endlicher Dicke auszubilden. Fertigungstechnisch hat es sich jedoch als zweckmäßig erwiesen, wenn der Hohlraum ein zylinderähnlicher Ringraum ist, d.h. daß der Hohlraum durch zu der Längsachse koaxiale Zylindermantelflächen begrenzt ist.

Hinsichtlich des Querschnitts des Hohlraums sind ebenfalls wiederum alle möglichen Formen denkbar, so wäre es beispielsweise denkbar, daß der Ringraum ellipsoidähnlich ist. Fertigungstechnisch ist es jedoch besonders vorteilhaft, wenn der Hohlraum ein kreiszylindrischer Ringraum ist, da dieser leicht und mit hoher Präzision herstellbar ist und andererseits auch eine große Stabilität aufweist, was bei Lasern stets erwünscht ist.

Alternativ dazu wäre es jedoch auch denkbar, daß der Ringraum ein rechteckzylindrischer Ringraum ist, da sich auch ein derartiger Ringraum fertigungstechnisch einfach und mit hoher Präzision herstellen läßt.

Die Wellenleiterwandflächen können nun ihrerseits auf separaten, in den Hohlraum eingesetzten Teilen angeordnet sein. Besonders kostenmäßige Vorteile ergeben sich jedoch dann, wenn der Hohlraum mit seinen Wandflächen die Wellenleiterwandflächen bildet, so daß keine zusätzlichen Teile zur Herstellung des Wellenleiters erforderlich sind.

Hinsichtlich der Dimensionierung des Wellenleiters ist es im Rahmen einer bevorzugten Ausführungsform der vorliegenden Erfindung günstig, wenn der Wellenleiter eine Breite aufweist, die maximal gleich der Erstreckung der Wandflächen in Richtung der Längsachse ist, wobei in einem solchen Fall der Wellenleiter vorzugsweise mit seiner Längserstreckung im wesentlichen parallel zur Azimutalrichtung verläuft.

Bei anderen Ausführungsformen, insbesondere bei solchen, bei welchen der Wellenleiter sich spiralförmig in dem Hohlraum windet, ist vorgesehen, daß der Wellenleiter eine Breite aufweist, die maximal gleich einem ganzzahligen Bruchteil der Erstreckung der Wandflächen in Richtung der Längsachse ist.

Zur günstigen Hochfrequenzanregung des von den Wellenleiterwandflächen eingeschlossenen Entladungsraums hat es sich als zweckmäßig erwiesen, wenn der Wellenleiter sich über seine ganze Längserstreckung und Breite ausdehnende Elektroden umfaßt.

Eine besonders mechanisch günstige Lösung der erfindungsgemäßen Wellenleiteranordnung sieht vor, daß der Wellenleiter ein Außenteil mit einer Ausnehmung und einem in diese Ausnehmung einsetzbares und mit dem jeweiligen Außenteil verbindbares Innenteil umfaßt, und daß der Hohlraum durch einen Zwischenraum zwischen dem Innen- und dem jeweiligen Außenteil gebildet ist.

Insbesondere bei all den Ausführungsformen, bei welchen die Wellenleiterwandflächen durch die Wandflächen des Hohlraums gebildet sind, ist es zweckmäßig, wenn ein Verlauf des Wellenleiters in dem Hohlraum durch ein optisches Element festgelegt ist, welches eine eindeutige Richtung der Längserstreckung des Wellenleiters, sei es im wesentlichen parallel zur Azimutalrichtung oder in einem Winkel zur Azimutalrichtung eindeutig festlegt, so daß insbesondere auch die Gefahr parasitärer Strahlung quer zur Längsrichtung des Wellenleiters unterbunden ist.

Eine Möglichkeit, diese optischen Elemente auszubilden, ist die, daß das optische Element ein Spiegel ist, welcher eine Ausbreitungsrichtung eines Strahlenverlaufs und damit auch die Längserstreckung des Wellenleiters vorgibt.

Eine andere bevorzugte Möglichkeit, insbesondere bei spiralförmiger Anordnung des Wellenleiters im Hohlraum, ist die, daß das optische Element ein eine Ausbreitung von Laserstrahlung hemmendes Element ist. Dies können im einfachsten Fall Nuten zwischen den Seitenkanten aufeinanderfolgender Windungen des Wellenleiters sein. Es ist aber auch möglich, anstelle der Nuten Wandelemente zu verwenden, welche auch eine Ausbildung parasitärer Strahlung quer zur Längserstreckung des Wellenleiters verhindern.

Bei all den bisher beschriebenen Ausführungsbeispielen der erfindungsgemäßen Wellenleiteranordnung wurde nicht im einzelnen darauf eingegangen, ob diese Wellenleiteranordnung für ein Gaslasersystem zur Verwendung mit einem Resonator eingesetzt werden soll, oder lediglich als Verstärker dienen soll. Im Rahmen eines Ausführungsbeispiels ist daher zweckmäßigerweise vorgesehen, daß der Entladungsraum des Wellenleiters zumindest teilweise von einem Resonatorstrahlenverlauf durchsetzt ist, so daß zumindest dieser Teil des Entladungsraums zur Erzeugung von Laserstrahlung mittels eines Resonators dient.

Besonders bevorzugt ist dabei, wenn der Resonatorstrahlenverlauf derjenige eines instabilen Resonators mit ungefähr parallel zu den Wellenleiterwandflächen von einer Resonatorachse zu einem austretenden Laserstrahl sich erstreckender transversaler Ausdehnung ist. Ein derartig in dem Wellenleiter angeordneter Resonatorstrahlenverlauf hat den großen Vorteil, daß bei diesem der Wellenleiter mit relativ großer Breite ausgeführt werden kann und dennoch im wesentlichen lediglich in einem Mode schwingende Laserstrahlung entsteht.

Als besonders günstige Resonatorform bietet es sich an, wenn der Resonator ein konfokaler Resonator ist. Ferner ist es zweckmäßig, wenn die Resonatorachse parallel zur Längserstreckung des Wellenleiters verläuft.

Die Breite des Wellenleiters läßt sich hierbei dann optimal ausnützen, wenn der Resonatorstrahlenverlauf sich in transversaler Richtung maximal über die Breite des Wellenleiters erstreckt, wobei insbesondere der Resonatorstrahlenverläuf äußere, parallel zueinander verlaufende Strahlen aufweist.

Eine besonders vorteilhafte Ausnützung der Breite des Wellenleiters ist dann möglich, wenn der Resonator als zur Resonatorachse symmetrischer Resonator ausgebildet ist.

Diese Resonatorausbildung hat lediglich den Nachteil, daß zwei Laserstrahlen aus dem Resonator austreten, welche durch eine nachfolgende Optik zusammengeführt werden müssen. Sofern einer derartige Optik nicht erwünscht ist, wird der Resonator vorteilhafterweise als Hälfte eines zur Resonatorachse symmetrischen Resonators aufgebaut.

Soll der Wellenleiter vollständig zur Erzeugung von Laserstrahlen mittels eines Resonators genutzt werden, so ist zweckmäßigerweise der Wellenleiter an beiden Enden mit Spiegeln des Resonators versehen.

Wie bereits erwähnt, ist die erfindungsgemäße Wellenleiteranordnung nicht ausschließlich dazu geeignet, in Zusammenhang mit einem Resonator als Laser zu dienen, es ist vielmehr ebenfalls denkbar, daß zumindest ein Teil des Entladungsraums des Wellenleiters von einem Verstärkerstrahlengang eines Laserverstärkers durchsetzt ist, d.h. daß die erfindungsgemäße Wellenleiteranordnung entweder mit einem Teil des Entladungsraums oder mit dem gesamten Entladungsraum als Laserverstärker dient, wobei in diesem Teil des Entladungsraums dann ein Laserstrahl einzukoppeln ist.

Auch hierbei hat es sich in Anpassung an die geometrische Form des Wellenleiters als zweckmäßig erwiesen, wenn der Verstärkerstrahlengang eine quer zu einem eintretenden Laserstrahl verlaufende transversale Ausdehnung aufweist.

Alternativ dazu ist es jedoch auch im Rahmen eines anderen Ausführungsbeispiels ohne Probleme möglich, daß ein in den Wellenleiter eingekoppelter Laserstrahl den Wellenleiter in seiner Längserstreckung durchläuft, d.h. daß der Wellenleiter lediglich im wesentlichen so breit wie der Laserstrahl gewählt wird und die notwendige Fläche zur Erzeugung der gewünschten Verstärkung dadurch erreicht wird, daß sich dieser Wellenleiter spiralförmig in Richtung der Längsachse windet.

Bei allen Ausführungsbeispielen, bei welchen ein Laserverstärker mit dem Wellenleiter kombiniert wird, ist es günstig, wenn der Laserverstärker ein parallel zur Längserstreckung des Wellenleiters verlaufende optische Achse aufweist.

Weitere Merkmale und Vorteile der erfindungsgemäßen Wellenleiteranordnung sind Gegenstand der nachfolgenden Beschreibung sowie der zeichnerischen Darstellung einiger Ausführungsbeispiele. In der Zeichnung zeigen:

Fig. 1 eine perspektivische Ansicht eines ersten Ausführungsbeispiels einer erfindungsgemäßen Wellenleiteranordnung;

Fig. 2 einen Schnitt längs Linie 2-2 in Fig. 1;

Fig. 3 einen Schnitt längs Linie 3-3 in Fig. 1;

Fig. 4 einen Schnitt längs Linie 4-4 in Fig. 1;

Fig. 5 eine teilweise aufgebrochene Draufsicht auf ein zweites Ausführungsbeispiel der erfindungsgemäßen Wellenleiteranordnung;

Fig 6 einen Schnitt längs Linie 6-6 in Fig. 5;

Fig 7 einen Schnitt längs Linie 7-7 in Fig. 6;

Fig 8 einen Schnitt längs Linie 8-8 in Fig. 6;

Fig 9 eine teilweise aufgebrochene perspektivische Ansicht eines dritten Ausführungsbeispiels einer erfindungsgemäßen Wellenleiteranordnung;

Fig 10 eine teilweise aufgebrochene Draufsicht auf ein viertes Ausführungsbeispiel der erfindungsgemäßen Wellenleiteranordnung;

Fig 11 einen Schnitt längs Linie 11-11 in Fig. 10, und

Fig 12 einen Schnitt längs Linie 12-12 in Fig. 10.

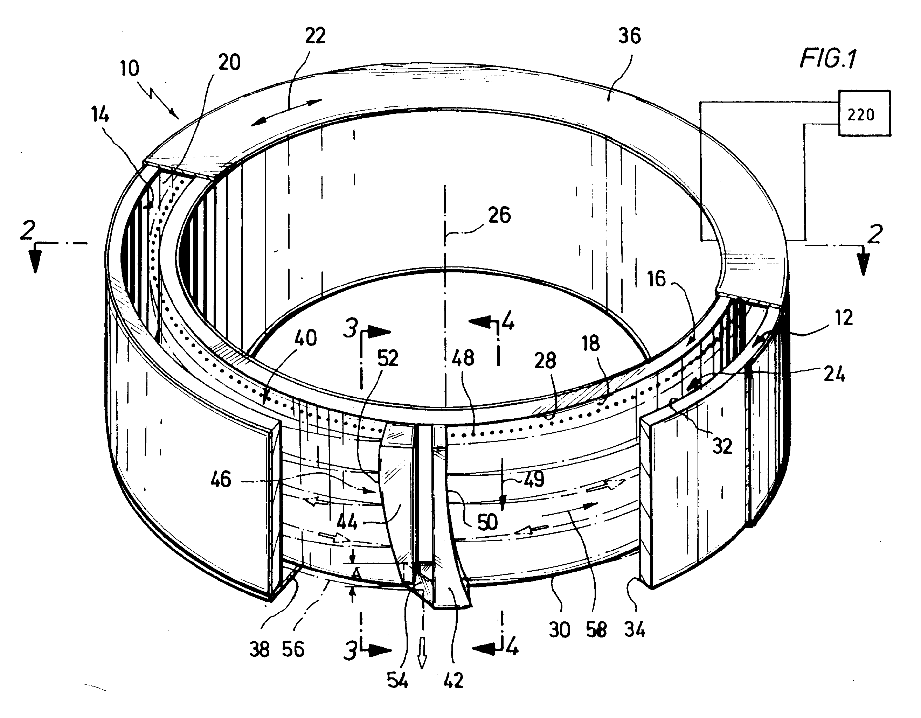

Ein erstes Ausführungsbeispiel der erfindungsgemäßen Wellenleiteranordnung, dargestellt in den Fig. 1 bis 4, umfaßt im einzelnen einen als Ganzes mit 10 bezeichneten Wellenleiterträger, welcher ein Außenteil 12 mit einer inneren kreiszylindrischen Ausnehmung 14, in welches ein Innenteil 16 mit einer kreiszylindrischen Mantelfläche 18 so eingesetzt ist, daß die Mantelfläche 18 in einem konstanten Abstand von einer kreiszylindrischen Innenfläche 20 der Ausnehmung 14 verläuft. Dadurch bildet sich zwischen der Mantelfläche 18 und der Innenfläche 20 ein in einer Azimutal- oder Umlaufrichtung 22 geschlossener ringähnlicher Hohlraum 24, welcher sich in Richtung einer senkrecht zur Umlaufrichtung 22 verlaufenden Längsachse 26 der zylindrischen Ausnehmung 14 erstreckt.

Sowohl das Innenteil 16 als auch das Außenteil 12 sind so ausgebildet, daß ihre Ausdehnung parallel zur Längsachse 26, d.h. ihre Breite, identisch ist und sich folglich auch der Hohlraum 24 zwischen beiderseits des Innenteils 16 liegenden Seitenkanten 28 und 30 sowie beiderseits des Außenteils liegenden Seitenkanten 32 und 34 erstreckt.

Das Innenteil 16 ist dabei an dem Außenteil 12 durch das Außenteil 12 und das Innenteil 16 im Bereich ihrer Seitenkanten 28 und 32 sowie im Bereich ihrer Seitenkanten 30 und 34 überdeckende Seitenwände 36 bzw. 38 gehalten.

Die Innenfläche 20 des Außenteils 12 sowie die Mantelfläche 18 des Innenteils 16 sind optisch reflektierend ausgebildet und stellen Wellenleiterwandflächen dar.

Dieser Wellenleiter 40 ist jeweils endseitig durch zwei Spiegel 42 und 44 abgeschlossen, welche ihrerseits einen den Wellenleiter 40 durchsetzenden Resonator 46 bilden. Dieser Resonator 46 ist als instabiler Resonator ausgeführt, welcher die Hälfte eines zu einer Resonatorachse 48 symmetrischen Resonators bildet. Die Resonatorachse 48, welche als optische Achse des Resonators 46 in ihren Schnittpunkten mit Spiegelflächen 50 und 52 der Spiegel 42 bzw. 44 senkrecht auf diesen steht, verläuft dabei in Höhe der Seitenkanten 28 und 32 des Innenteils 16 bzw. Außenteils 12. Ausgehend von dieser Resonatorachse 48 erstreckt sich in transversaler Richtung 49 parallel zur Längsachse 26 des Wellenleiterträgers 10 ein Strahlenverlauf des Resonators 46 bis in Höhe der Seitenkanten 30 und 34 des Innenteils 16 bzw. Außenteils 12, wobei einzelne Strahlen dieses Strahlenverlaufs im wesentlichen in Umlaufrichtung 22 oder entgegengesetzt zu dieser gerichtet sind und dabei in zunehmendem Abstand von der Resonatorachse 48 einen spitzen Winkel mit dieser Umlaufrichtung 22 einschließen.

Der Spiegel 42 des Resonators 46 ist dabei als konkaver Spiegel ausgebildet und erstreckt sich über die gesamte Breite des Hohlraums 24 von den Seitenkanten 28 und 32 bis zu den Seitenkanten 30 und 34. Dagegen ist der Spiegel 44 als konvexer Spiegel des Resonators 46 ausgebildet und erstreckt sich von den Seitenkanten 28 und 32 in Richtung der Seitenkanten 30 und 34, endet jedoch in einem Abstand A von diesen. Dieser verbleibende, durch den konvexen Spiegel 44 nicht abgeschlossene Bereich des Wellenleiters 40 ist mit einem Auskoppelspiegel 54 versehen, welcher einen auf diesen in Umlaufrichtung 22 auftreffenden Laserstrahl 56 in radialer Richtung zur Längsachse 26 nach außen reflektiert und somit aus dem Resonator 46 auskoppelt.

Die Spiegel 42 und 44 sind dabei vorzugsweise so dimensioniert, daß sie in den Hohlraum 24 passen und mit ihren Spiegelflächen 50 bzw. 52 senkrecht auf der Mantelfläche 18 sowie der Innenfläche 20 stehen.

Bei dem Resonator 46 handelt es sich um einen kreisförmig gebogenen, mit einer zu einer der Umlaufrichtung 22 folgenden Längserstreckung 58 des Wellenleiters 40 parallelen Resonatorachse 48, wobei die Spiegelflächen 50 und 52, bezogen auf einen Resonator mit gerader Längserstreckung 58, konfokal und zylindrisch ausgebildet sind.

Das erste Ausführungsbeispiel der erfindungsgemäßen Wellenleiteranordnung stellt somit ein Lasersystem dar, bei welchem der Resonator 46 in den kreisringförmig geschlossenen Hohlraum 24 eingesetzt und entsprechend diesem gebogen ist.

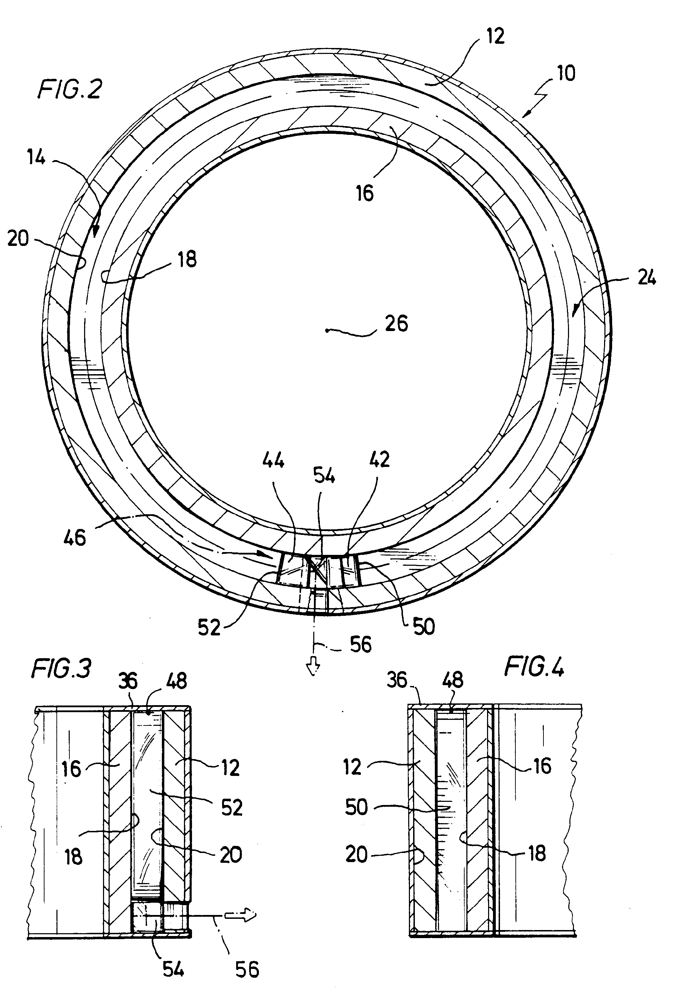

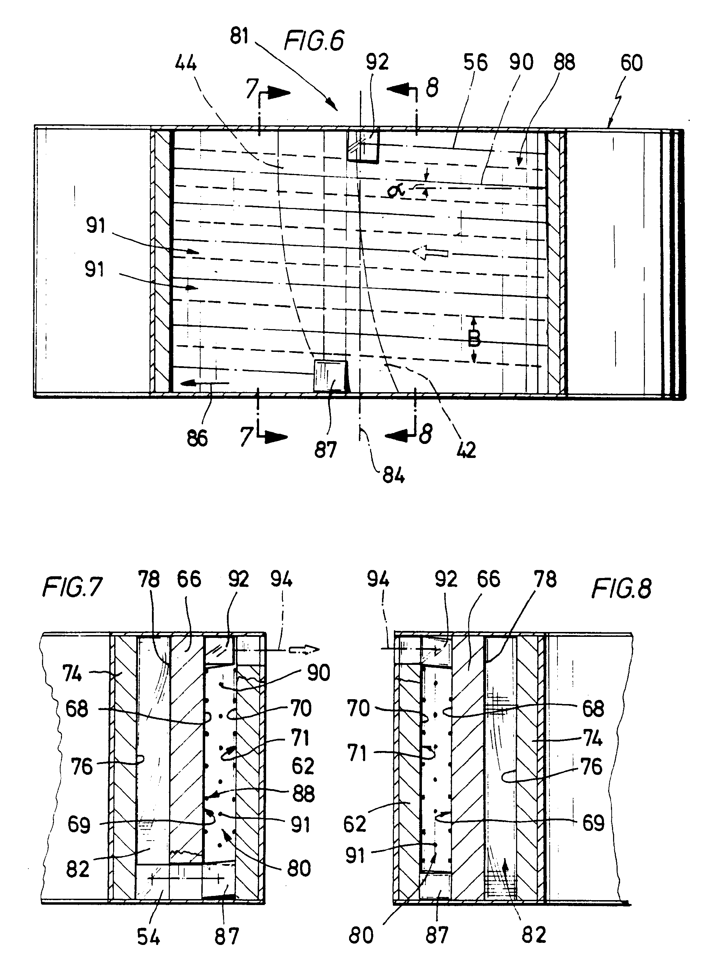

Bei einem zweiten Ausführungsbeispiel einer erfindungsgemässen Wellenleiteranordnung, dargestellt in den Fig. 5 bis 8, umfaßt ein als Ganzes mit 60 bezeichneter Wellenleiterträger ein Außenteil 62 mit einer kreiszylindrischen Ausnehmung 64, in welche ein erstes Innenteil 66 so eingesetzt ist, daß eine erste Mantelfläche 68 von diesem in konstantem Abstand von einer ersten Innenfläche 70 der Ausnehmung 64 verläuft.

Dieses erste Innenteil 66 trägt seinerseits wieder eine zylindrische Ausnehmung 72, in welche ein zweites Innenteil 74 so eingesetzt ist, daß eine zweite Mantelfläche 76 desselben in konstantem Abstand von einer zweiten Innenfläche 78 der Ausnehmung 72 verläuft. Somit umfaßt also der Wellenleiterträger 60 einen zwischen der ersten Innenfläche 70 und der ersten Mantelfläche 68 liegenden ersten kreisringförmigen Hohlraum 80 sowie einen zwischen der zweiten Innenfläche 78 und der zweiten Mantelfläche 76 liegenden zweiten kreisringförmigen Hohlraum 82.

Beide Hohlräume 80 und 82 erstrecken sich in Richtung der als Zylinderachse dienenden Längsachse 84 senkrecht zu einer Azimutal- oder Umlaufrichtung 86, längs welcher diese Hohlräume 80, 82 ringförmig geschlossen verlaufen.

Der zweite Hohlraum 82 bildet mit der Mantelfäche 76 und der Innenfläche 78 einen ersten Wellenleiter 83, in welchem der bereits im Zusammenhang mit dem ersten Ausführungsbeispiel beschriebene Resonator 46 angeordnet ist, so daß bezüglich dessen Beschreibung auf die Ausführungen zum ersten Ausführungsbeispiel verwiesen werden kann. Von diesem ersten Resonator 46 wird der Laserstrahl 56 durch einen Durchbruch 85 hindurch in den ersten Hohlraum 80 reflektiert und dort durch einen Umlenkspiegel 87 wiederum in Umlaufrichtung 86 umgelenkt.

Im Gegensatz zum zweiten Hohlraum 82 ist im ersten Hohlraum 80 kein Resonator vorgesehen, sondern in diesem ist ein Laserverstärker 81 angeordnet, durch welchen der Laserstrahl 56 beim Hindurchlaufen ohne hin- und herreflektiert zu werden sukzessive verstärkt wird. Auch hierbei bilden die erste Innenfläche 70 und die erste Mantelfläche 68 Wellenleiterwandflächen 69 bzw.71 eines eine konstante Breite B aufweisenden zweiten Wellenleiters 88, welcher mit seiner Längserstreckung 90 spiralförmig in dem ersten Hohlraum 80 verläuft, wobei die Längserstreckung 90 des schraubenförmigen Wellenleiters einen Winkel $\alpha$ mit der Umlaufrichtung 86 einschließt, welcher den Steigungswinkel dieser Spirale darstellt. Nach mehreren spiralförmigen Windungen 91 wird der Laserstrahl 56, welcher koaxial zur Längserstreckung 90 durch diesen Wellenleiter 88 hindurch verläuft, durch einen Umlenkspiegel 92 bezüglich der Längsachse 84 radial nach außen reflektiert und verläßt als Verstärkerlaserstrahl 94 die Wellenleiteranordnung.

Die Breite B des Wellenleiters 88 ist dabei so zu wählen, daß sie größer oder gleich der Breite des Laserstrahls 56 ist, die gleich dem Abstand A des konvexen Spiegels 44 von den Seitenkanten 30 und 34 des ersten Wellenleiters 83 ist.

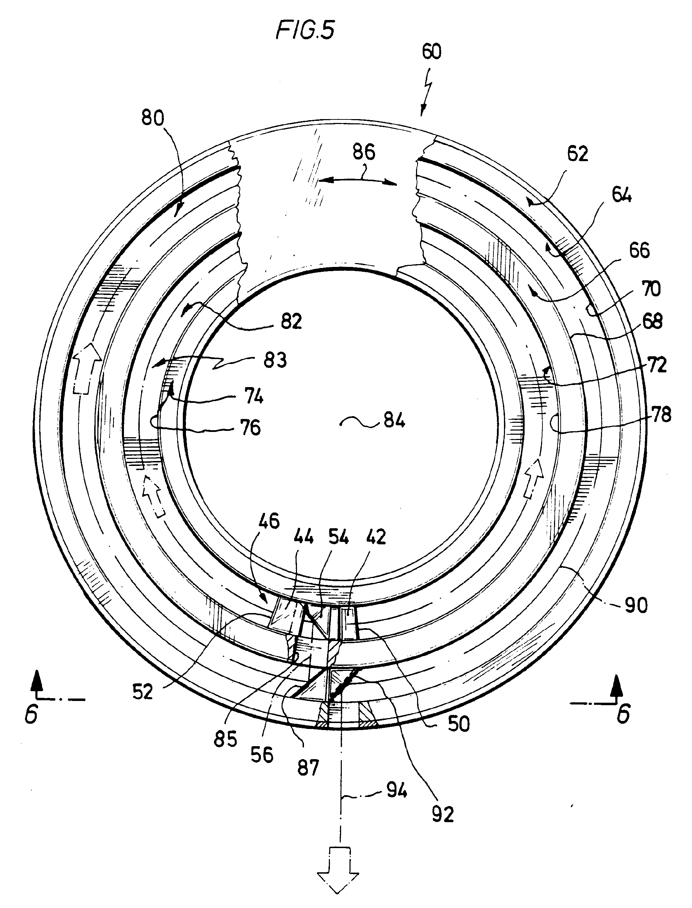

Wie aus Fig. 6 ersichtlich, liegen die Windungen 91 des zweiten Wellenleiters 88 so eng aneinander, daß sie sich seitlich berühren.

Bei diesem zweiten Ausführungsbeispiel dient also der Hohlraum 80 mit seiner ganzen Breite zur Erzeugung des Laserstrahls 56 mittels des instabilen Resonators, während sich im Hohlraum 82 ein schmälerer, ungefähr der Breite B des Laserstrahls 56 entsprechender Wellenleiter 88 spiralförmig über die Breite des Hohlraums 82 windet.

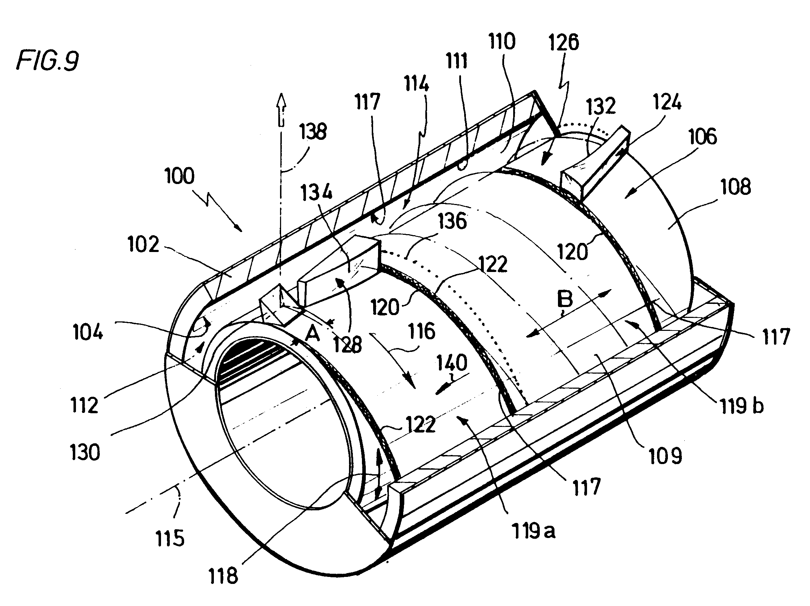

Bei einem dritten Ausführungsbeispiel einer erfindungsgemäßen Wellenleiteranordnung, dargestellt in Fig. 9, umfaßt ein Wellenleiterträger 100 ebenfalls mit einem Außenteil 102, welches eine zylindrische Ausnehmung 104 aufweist, in welcher ein Innenteil 106 so eingesetzt ist, daß eine Mantelfläche 108 desselben in konstantem Abstand von einer Innenfläche 110 der zylindrischen Ausnehmung 104 verläuft.

Ein dabei gebildeter ringförmiger Hohlraum 112 erstreckt sich in Richtung einer Längsachse 115 des Wellenleiterträgers 100, welche koaxial zur Zylinderachse der zylindrischen Ausnehmung 104 angeordnet ist. Die Mantelfläche 108 und die Innenfläche 110 bilden dabei einen als Ganzes mit 114 bezeichneten Wellenleiter mit Wellenleiterwandflächen 109 bzw. 111, welcher mit einer Längserstreckung 116 spiralförmig in dem Hohlraum 112 verläuft, so daß die Längserstreckung 116 mit einer Umlaufrichtung 118 ebenfalls einen Winkel α einschließt. Der spiralförmige Wellenleiter 114 verläuft dabei in zwei Windungen 119a, b in dem Hohlraum 112, wobei der Winkel α so gewählt ist, daß beide Seitenkanten 120 und 122 des Wellenleiters bei aufeinanderfolgenden Windungen nahe beieinander liegen. Zwischen diesen jeweils nahe beieinander liegenden Seitenkanten ist auf der Mantelfläche 108 und der Innenfläche 110 eine nichtreflektierende Schicht 117 aufgetragen, so daß sich von dieser die reflektierenden Wellenleiterwandflächen 109, 111 deutlich unterscheiden.

Der Wellenleiter 114 ist jeweils endseitig durch Spiegel 124 und 128 abgeschlossen, wobei die beiden Spiegel als Spiegel eines instabilen Resonators ausgebildet sind. Der Spiegel 124 ist dabei konkav, der Spiegel 128 konvex ausgebildet. Ferner erstreckt sich der Spiegel 124 über die gesamte Breite B des Wellenleiters 114 von der Seitenkante 120 bis zur Seitenkante 122, während sich der Spiegel 128 von der Seitenkante 120, ausgehend in Richtung auf die Seitenkante 122, erstreckt, jedoch in einem Abstand A von dieser endet. Zwischen dem Spiegel 128 und der Seitenkante 122 ist dabei ein Auskoppelspiegel 130 vorgesehen.

Beide Spiegel 124 und 128 sind als Spiegel eines halben symmetrischen, bezogen auf eine gerade Längserstreckung 116 konfokalen Resonators mit zylindrischen Spiegeloberflächen 132, 134 ausgebildet, wobei diese Spiegeloberflächen 132, 134 senkrecht auf der Mantelfläche 108 und der Innenfläche 110 stehen.

Eine Resonatorachse 136 des Resonators, auf welcher die Spiegeloberflächen 132 und 134 im Schnittpunkt mit dieser senkrecht stehen, verläuft bei diesem Resonator 126 in Höhe der Seitenkante 120 des Wellenleiters 114 und stellt somit die optische Achse dieses Resonators dar.

Ein im Bereich der Resonatorachse 136 entstehender Laserstrahl 138 wird nun so lange zwischen den Spiegeln 124 und 128 hin- und herreflektiert bis er von der Seitenkante 120 so weit in transversaler Richtung 140 bis zur Seitenkante 122 gewandert ist, daß er auf den Auskoppelspiegel 130 trifft und von diesem in bezüglich der Längsachse 115 radialer Richtung nach außen reflektiert wird.

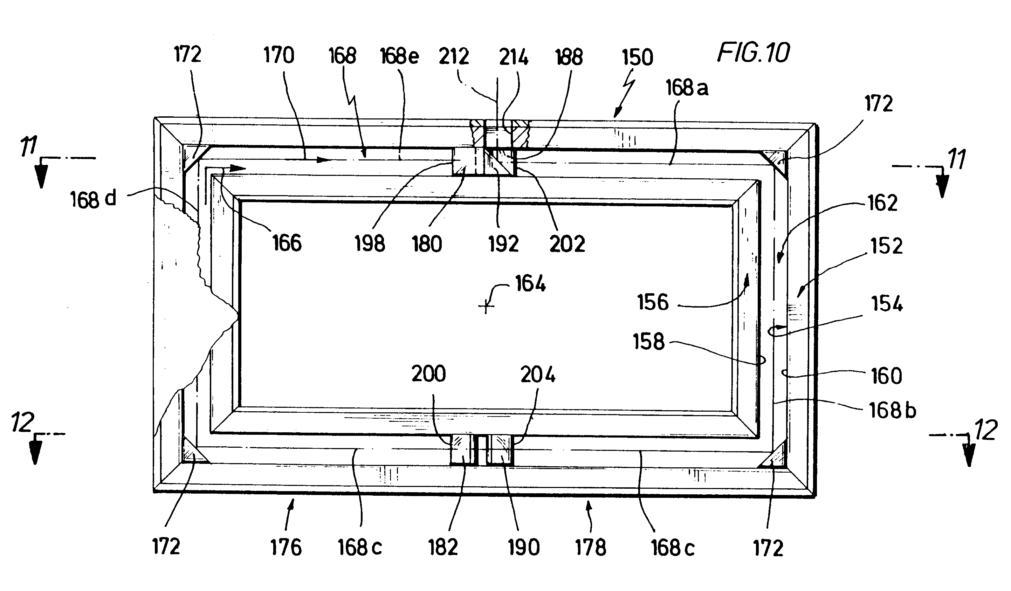

Ein viertes Ausführungsbeispiel der erfindungsgemäßen Wellenleiteranordnung, dargestellt in Fig. 10 bis 12, umfaßt einen Wellenleiterträger 150, welcher ein Außenteil 152 mit einer inneren, einen rechteckigen Querschnitt aufweisenden Ausnehmung 154 zeigt. In dieses Außenteil 152 ist ein Innenteil 156 eingesetzt, welches einen äußeren rechteckförmigen Querschnitt aufweist und eine Außenfläche 158 trägt, welche in konstantem Abstand von einer Innenfläche 160 der Ausnehmung 154 verläuft. Somit besteht zwischen der Außenfläche 158 und der Innenfläche 160 ein Hohlraum 162, welcher sich in Richtung einer Längsachse 164 des Wellenträgers erstreckt und in einer auf die Längsachse 164 bezogenen Umlaufrichtung 166 ringförmig geschlossen ist.

Die Außenfläche 158 und die Innenfläche 160 bilden dabei Wellenleiterwandflächen eines als Ganzes mit 168 bezeichneten Wellenleiters, welcher eine Längserstreckung 170 aufweist, die parallel zur Umlaufrichtung 166 verläuft, und welcher eine Breite aufweist, die der Erstreckung des Hohlraums 162 in Richtung der Längsachse 164 entspricht. Der Wellenleiter 168 ist dabei aus insgesamt vier gerade gerichteten Stücken 168a, 168b, 168c und 168d sowie 168e zusammengesetzt, wobei zwischen den gerade gerichteten Stücken 168a und 168b, 168b und 168c, 168c und 168d sowie 168d und 168e jeweils ein Umlenkspiegel 172 vorgesehen ist, welcher die gesamte von einem Wellenleiterstück geführte Strahlung in das jeweils andere Wellenleiterstück umlenkt.

Der Wellenleiter 168 schließt zwischen der Außenfläche 158 und der Innenfläche 160 einen Entladungsraum ein, welcher teilweise von einem Resonatorstrahlenverlauf eines Resonators 176 und teilweise von einem Verstärkerstrahlenverlauf eines Verstärkers 178 durchsetzt ist.

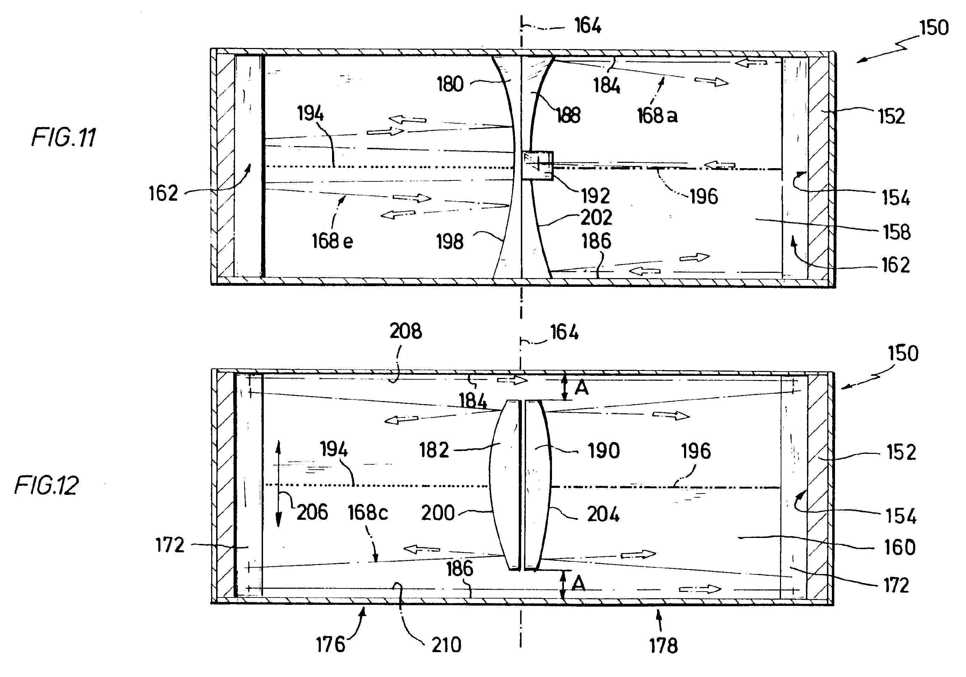

Der Resonator 176 wird dabei gebildet durch einen das Wellenleiterstück 168e an einem dem Wellenleiterstück 168d gegenüberliegenden Ende angeordneten Spiegel 180 sowie durch einen ungefähr mittig des Wellenleiterstücks 168c angeordneten Spiegel 182, wobei der Spiegel 180 ein konkaver Spiegel eines instabilen Resonators ist, während der Spiegel 182 ein konvexer Spiegel eines instabilen Resonators ist. Der Spiegel 180 erstreckt sich dabei über die gesamte Breite des Wellenleiters 168, während der Spiegel 182, wie in Fig. 12 zu erkennen, beiderseits in einem Abstand A von beiden Seitenkanten 184, 186 des Wellenleiters 168 endet.

Auch der Verstärker 178 umfaßt einen Spiegel 188 und einen Spiegel 190, wobei der Spiegel 190 Rücken an Rücken mit dem Spiegel 182 angeordnet ist, ebenfalls konvex ausgebildet ist und ebenfalls im Abstand A von den Seitenkanten 184, 186 des Wellenleiters 168 endet, während sich der Spiegel 188 über die gesamte Breite des Wellenleiters 168 erstreckt und konkav ausgebildet ist. Außerdem ist mittig des Spiegels 188 ein Auskoppelspiegel 192 vorgesehen.

Eine als Resonatorachse 194 bezeichnete optische Achse verläuft dabei mittig zwischen den Seitenkanten 184 und 186 und findet im Wellenleiterstück 168c ihre Fortsetzung in einer koaxial zu dieser angeordneten optischen Achse 196 des Verstärkers 178, welche ebenfalls mittig zwischen den Seitenkanten 184 und 186 verläuft.

Die Spiegel 180 und 182 des Resonators 176 sind als konfokale Spiegel, bezogen auf einen langgestreckten Resonator, ausgebildet, und ihre Spiegelflächen 198 bzw. 200 sind zylindrisch und stehen jeweils senkrecht auf der Außenfläche 158 sowie der Innenfläche 160.

In gleicher Weise sind die Spiegel 188 und 190 mit ihren Spiegelflächen 202 bzw. 204 ausgebildet, wobei diese dieselbe Krümmung wie die Spiegelflächen 198 und 200 aufweisen sowie außerdem genau wie die Spiegelflächen 198 und 200 zylindrisch ausgebildet sind.

In dem Resonatorachse 194 symmetrischen Resonator 176 entstehen, ausgehend von der Resonatorachse 194 durch Hin- und Herreflexion in transversaler Richtung 206, welche parallel zu den Außenflächen 158 und Innenflächen 160 verläuft, nach außen wandernde Strahlen, welche als Laserstrahlen 208 und 210 den Resonator 176 verlassen und seitlich des Spiegels 182 sowie seitlich des Spiegels 190 in den Verstärker 178 übertreten, dort wieder vom Spiegel 188 auf den Spiegel 190 reflektiert werden und durch weitere zunehmende Reflexion in transversaler Richtung 206 zu der optischen Achse 196 wandern. Damit treffen sie auf den Auskoppelspiegel 192, welcher einen Verstärkerlaserstrahl 212 radial bezüglich der Längsachse 164 durch einen Durchbruch 214 im Außenteil 152 nach außen reflektiert.

Der in diesem Ausführungsbeispiel verwendete Resonator 176 mit den Spiegeln 180 und 182 kann auch in dem Hohlraum 82 des zweiten Ausführungsbeispiels Verwendung finden, wobei der Resonator 176 diesen Hohlraum dann ganz ausfüllt. Die Laserstrahlen 208 und 210 sind ähnlich wie der Laserstrahl 56 durch zwei Spiegel 54 in den Hohlraum 80 zu leiten, in welchem sie von zwei Spiegeln 87 ähnlich wie der Laserstrahl 54 umgelenkt werden. Die Laserstrahlen 208 und 210 verlaufen jedoch im Hohlraum 80 nicht spiralförmig, sondern werden durch den in diesem angeordneten Verstärker 178 mit Spiegeln 188 und 190 zu einem austretenden Laserstrahl 212 zusammengeführt, welcher dann durch den Spiegel 192 in radialer Richtung umgelenkt wird.

Bei allen beschriebenen Ausführungsformen der erfindungsgemäßen Wellenleiteranordnung wird eine Gasentladung in den Hohlräumen 24, 80,82,112 und 162 dadurch erzeugt, daß entweder die Außenteile 12, 62, 102, 152 sowie die Innenteile 16, 66, 74, 106, 156 aus Metall und mit einem entsprechenden Hochfrequenzgenerator 220, wie beispielhaft in Fig. 1 eingezeichnet, zur Erzeugung von Frequenzen im Bereich von MHz bis mehrere GHz, insbesondere im Bereich von 80 bis 400 MHz, verbunden sind. Alternativ dazu können die Außen- und Innenteile dielektrisch ausgebildet sein und auf ihren den Hohlräumen 24, 80, 82, 112 und 162 zugewandten Seiten eine metallische Beschichtung tragen, welche ihrerseits dann wiederum mit dem Hochfrequenzgenerator verbunden ist.

Als Lasergas findet bevorzugterweise CO oder $CO_2$ Verwendung, wobei bei $CO_2$ insbesondere mit Zusätzen von He, $N_2$ in üblichen Mischungsverhältnissen und vorteilhafterweise einem kleinen Anteil Xe gearbeitet wird.

**Patentansprüche**

1. Wellenleiteranordnung für ein hochfrequenzangeregtes, diffusionsgekühltes Gaslasersystem mit einem Wellenleiterträger, welcher einen bezogen auf eine Längsachse (26, 84, 115, 164) in Azimutalrichtung (22, 86, 118, 166) ringähnlich geschlossenen, sowie sich in Richtung der Längsachse erstreckenden Hohlraum (24, 80, 82, 112, 162) aufweist, mit einem in dem Hohlraum angeordneten, Laserstrahlung längs einer in Richtung der optischen Achse verlaufenden Längserstreckung (58, 90, 116, 170) führenden Wellenleiter, gebildet durch in konstantem Abstand voneinander angeordnete Wellenleiterwandflächen (16, 18; 69, 71; 109, 111; 158, 160), deren Breite ein Vielfaches ihres Abstandes beträgt und die einen Entladungsraum zwischen sich einschließen,
   **dadurch gekennzeichnet,**
   daß der Wellenleiter (40, 83, 88, 114, 168) in dem Hohlraum so angeordnet ist, daß seine Längserstreckung (58, 90, 116, 170) mit der Azimutalrichtung (22, 86, 118, 166) einen Winkel von $\leqq 30°$ einschließt.

2. Wellenleiteranordnung nach Anspruch 1, dadurch gekennzeichnet, daß die Längserstreckung (58, 90, 116, 170) mit der Azimutalrichtung (22, 86, 118, 166) einen Winkel von $\leqq 15°$ einschließt.

3. Wellenleiteranordnung nach Anspruch 2, dadurch gekennzeichnet, daß die Längserstreckung (58, 90, 116, 170) mit der Azimutalrichtung (22, 86, 118, 166) einen Winkel von $\leqq 5°$ einschließt.

4. Wellenleiteranordnung nach Anspruch 3, dadurch gekennzeichnet, daß der Wellenleiter (40, 83, 168) mit einer Längserstreckung (58, 170) im wesentlichen parallel zur Azimutalrichtung (22, 86, 166) verläuft.

5. Wellenleiteranordnung nach einem der Ansprüche 1 bis 3, dadurch gekennzeichnet, daß der Wellenleiter (88, 114) sich spiralförmig in Richtung der Längsachse (84, 115) windet.

6. Wellenleiteranordnung nach Anspruch 5, dadurch gekennzeichnet, daß aufeinanderfolgende Windungen (91, 119) des Wellenleiters (88, 114) mit ihren einander zugewandten Seitenkanten (120, 122) nahe beieinanderliegen.

7. Wellenleiteranordnung nach einem der vorstehenden Ansprüche, dadurch gekennzeichnet, daß der Hohlraum (24, 80, 82, 112, 162) ein zylinderähnlicher Hohlraum ist.

8. Wellenleiteranordnung nach Anspruch 7, dadurch gekennzeichnet, daß der Ringraum (24, 80, 82, 112) ein kreiszylindrischer Ringraum ist.

9. Wellenleiteranordnung nach Anspruch 7, dadurch gekennzeichnet, daß der Ringraum (162) ein rechteckzylindrischer Ringraum ist.

10. Wellenleiteranordnung nach einem der voranstehenden Ansprüche, dadurch gekennzeichnet, daß der Hohlraum (24; 80, 82; 112; 162) mit seinen Wandflächen die Wellenleiterwandflächen (16, 18; 69, 71; 109, 111; 158, 160) bildet.

11. Wellenleiteranordnung nach einem der voranstehenden Ansprüche, dadurch gekennzeichnet, daß der Wellenleiter (40, 83, 88, 114, 168) eine Breite aufweist, die maximal gleich der Erstreckung der Wandflächen (16, 18; 68, 70; 76, 78; 108, 110; 158, 160) des Hohlraums (24, 80, 82, 112, 162) in Richtung der Längsachse (26, 84, 115, 164) ist.

12. Wellenleiteranordnung nach einem der Ansprüche 1 bis 10, dadurch gekennzeichnet, daß der Wellenleiter (88, 114) eine Breite aufweist, die maximal gleich einem ganzzahligen Bruchteil der Erstreckung der Wandflächen (76, 78, 108, 110) des Hohlraums (82, 112) in Richtung der Längsachse (84, 115) ist.

13. Wellenleiteranordnung nach einem der voranstehenden Ansprüche, dadurch gekennzeichnet, daß der Wellenleiter (40, 83, 88, 114, 168) sich über seine gesamte Längserstreckung (58, 90, 116, 170) und Breite ausdehnende Elektroden umfaßt.

14. Wellenleiteranordnung nach einem der voranstehenden Ansprüche, dadurch gekennzeichnet, daß der Wellenleiterträger (10, 60, 100, 150) ein Außenteil (12, 62, 102, 152) mit einer Ausnehmung (14, 64, 104, 154) und ein in diese Ausnehmung einsetzbares und mit dem Außenteil verbindbares Innenteil (16, 66, 74, 106, 156) umfaßt und daß der Hohlraum (24, 80, 82, 112, 162) durch einen Zwischenraum zwischen dem Innenteil und dem jeweiligen Außenteil gebildet ist.

15. Wellenleiteranordnung nach einem der voranstehenden Ansprüche, dadurch gekennzeichnet, daß der Verlauf des Wellenleiters (88, 114) in dem Hohlraum ( 82, 112) durch ein optisches Element (87; 117) festgelegt ist.

16. Wellenleiteranordnung nach Anspruch 15, dadurch gekennzeichnet, daß das optische Element einen Spiegel (87) umfaßt, welcher eine Ausbreitungsrichtung (116) eines Strahlenverlaufs vorgibt.

17. Wellenleiteranordnung nach Anspruch 15, dadurch gekennzeichnet, daß das optische Element ein eine Ausbreitung von Laserstrahlung hemmendes Element (117) ist.

18. Wellenleiteranordnung nach einem der voranstehenden Ansprüche, dadurch gekennzeichnet, daß der Entladungsraum des Wellenleiters (40, 83, 88, 114, 168) zumindest teilweise von einem Resonatorstrahlenverlauf durchsetzt ist.

19. Wellenleiteranordnung nach Anspruch 18, dadurch gekennzeichnet, daß der Resonatorstrahlenverlauf derjenige eines instabilen Resonators mit ungefähr parallel zu den Wellenleiterwandflächen (16, 18; 69, 71; 109, 111; 158, 160) von einer Resonatorachse (48, 136, 194) zu einem austretenden Laserstrahl (56; 138; 208, 210) sich erstreckender transversaler Ausdehnung (49, 140, 206) ist.

20. Wellenleiteranordnung nach Anspruch 19, dadurch gekennzeichnet, daß der Resonator ein konfokaler Resonator ist.

21. Wellenleiteranordnung nach einem der Ansprüche 18 bis 20, dadurch gekennzeichnet, daß die Resonatorachse (48, 136, 194) parallel zur Längserstreckung (58, 90, 116, 170) des Wellenleiters (40, 83, 88, 114, 168) verläuft.

22. Wellenleiteranordnung nach einem der Ansprüche 19 bis 21, dadurch gekennzeichnet, daß der Resonatorstrahlenverlauf sich in transversaler Richtung (49, 140, 206) maximal über die Breite (B) des Wellenleiters (40, 83, 114, 168) erstreckt.

23. Wellenleiteranordnung nach einem der Ansprüche 18 bis 22, dadurch gekennzeichnet, daß der Resonatorstrahlenverlauf äußere, parallel zueinander verlaufende Strahlen aufweist.

24. Wellenleiteranordnung nach einem der Ansprüche 19 bis 23, dadurch gekennzeichnet, daß der Resonator als zur Resonatorachse (48, 136, 194) symmetrischer Resonator ausgebildet ist.

25. Wellenleiteranordnung nach einem der Ansprüche 19 bis 23, dadurch gekennzeichnet, daß der Resonator als Hälfte eines zur Resonatorachse (48, 136, 194) symmetrischen Resonators aufgebaut ist.

26. Wellenleiteranordnung nach einem der voranstehenden Ansprüche, dadurch gekennzeichnet, daß zumindest ein Teil des Entladungsraums des Wellenleiters (88, 168) von einem Verstärkerstrahlengang eines Laserverstärkers (81, 178) durchsetzt ist.

27. Wellenleiteranordnung nach Anspruch 26, dadurch gekennzeichnet, daß der Verstärkerstrahlengang eine quer zu einem eintretenden Laserstrahl (208, 210) verlaufende transversale Ausdehnung (206) aufweist.

28. Wellenleiteranordnung nach Anspruch 26, dadurch gekennzeichnet, daß ein in den Wellenleiter eingekoppelter Laserstrahl (56) den Wellenleiter (88) in Richtung seiner Längserstreckung (90) durchläuft.

29. Wellenleiteranordnung nach einem der Ansprüche 26 bis 28, dadurch gekennzeichnet, daß der Laserverstärker (81, 178) eine parallel zur Längserstreckung (90, 170) des Wellenleiters (88, 168) verlaufende optische Achse aufweist.

## Claims

1. Waveguide device for a high-frequency-excited, diffusion-cooled gas laser system comprising a waveguide carrier having a cavity (24, 80, 82, 112, 162) closed like a ring in an azimuthal direction (22, 86, 118, 166) in relation to a longitudinal axis (26, 84, 115, 164) and extending in the direction of the longitudinal axis, a waveguide arranged in the cavity and guiding a laser beam along a lengthwise extent (58, 90, 116, 170) extending in the direction of the optical axis, said waveguide formed by waveguide wall surfaces (16, 18; 69, 71; 109, 11; 158, 160) arranged at a constant spacing from one another, the width of the wall surfaces being a multiple of their spacing from one another and the wall surfaces enclosing a discharge chamber between them, characterized in that the waveguide (40, 83, 88, 114, 168) is arranged in the cavity such that its lengthwise extent (58, 90, 116, 170) forms an angle of ≦ 30° with the azimuthal direction (22, 86, 118, 166).

2. Waveguide device as defined in claim 1, characterized in that the lengthwise extent (58, 90, 116, 170) forms an angle of ≦ 15° with the azimuthal direction (22, 86, 118, 166).

3. Waveguide device as defined in claim 2, characterized in that the lengthwise extent (58, 90, 116, 170) forms an angle of ≦ 5° with the azimuthal direction (22, 86, 118, 166).

4. Waveguide device as defined in claim 3, characterized in that a lengthwise extent (58, 170) of the waveguide (40, 83, 168) is essentially parallel to the azimuthal direction (22, 86, 166).

5. Waveguide device as defined in any of claims 1 to 3, characterized in that the waveguide (88, 114) winds in helical configuration in the direction of the longitudinal axis (84, 115).

6. Waveguide device as defined in claim 5, characterized in that successive windings (91, 119) of the waveguide (88, 114) lie close together with their facing side edges (120, 122).

7. Waveguide device as defined in any of the preceding claims, characterized in that the cavity (24, 80, 82, 112, 162) is a cylinder-like cavity.

8. Waveguide device as defined in claim 7, characterized in that the ring chamber (24, 80, 82, 112) is a circular-cylindrical ring chamber.

9. Waveguide device as defined in claim 7, characterized in that the ring chamber (162) is a rectangular-cylindrical ring chamber.

10. Waveguide device as defined in any of the preceding claims, characterized in that the cavity (24; 80, 82; 112; 162) forms with its wall surfaces the waveguide wall surfaces (16, 18; 69, 71; 109, 111; 158, 160).

11. Waveguide device as defined in any of the preceding claims, characterized in that a width of the waveguide (40, 83, 88, 114, 168) is at the most equal to the extent of the wall surfaces (16, 18; 68, 70; 76, 78; 108, 110; 158, 160) of the cavity (24, 80, 82, 112, 162) in the direction of the longitudinal axis (26, 84, 115, 164).

12. Waveguide device as defined in any of claims 1 to 10, characterized in that a width of the waveguide (88, 114) is at the most equal to an integral fraction of the extent of the wall surfaces (76, 78, 108, 110) of the cavity (82, 112) in the direction of the longitudinal axis (84, 115).

13. Waveguide device as defined in any of the preceding claims, characterized in that the waveguide (40, 83, 88, 114, 168) comprises electrodes extending over its entire lengthwise extent (58, 90, 116, 170) and width.

14. Waveguide device as defined in any of the preceding claims, characterized in that the waveguide carrier (10, 60, 100, 150) comprises an outer part (12, 62, 102, 152) with a recess (14, 64, 104, 154) and an inner part (16, 66, 74, 106, 156) insertable into this recess and connectable with the outer part and that the cavity (24, 80, 82, 112, 162) is formed by an intermediate space between the inner part and the respective outer part.

15. Waveguide device as defined in any of the preceding claims, characterized in that the course of the waveguide (88, 114) in the cavity (82, 112) is determined by an optical element (87; 117).

16. Waveguide device as defined in claim 15, characterized in that the optical element comprises a mirror (87) predetermining a direction of propagation (116) of a beam path.

17. Waveguide device as defined in claim 15, characterized in that the optical element is an element (117) impeding propagation of laser radiation.

18. Waveguide device as defined in any of the preceding claims, characterized in that the discharge chamber of the waveguide (40, 83, 88, 114, 168) is at least partially penetrated by a resonator beam path.

19. Waveguide device as defined in claim 18, characterized in that the resonator beam path is that of an unstable resonator with a transverse expansion (49, 140, 206) extending approximately parallel to the waveguide wall surfaces (16, 18; 69, 71; 109, 111; 158, 160) from a resonator axis (48, 136, 194) to an exiting laser beam (56; 138; 208, 210).

20. Waveguide device as defined in claim 19, characterized in that the resonator is a confocal resonator.

21. Waveguide device as defined in any of claims 18 to 20, characterized in that the resonator axis (48, 136, 194) extends parallel to the lengthwise extent (58, 90, 116, 170) of the waveguide (40, 83, 88, 114, 168).

22. Waveguide device as defined in any of claims 19 to 21, characterized in that the resonator beam path extends in a transverse direction (49, 140, 206) at the most over the width (B) of the waveguide (40, 83, 114, 168).

23. Waveguide device as defined in any of claims 18 to 22, characterized in that the resonator beam path has outer beams extending parallel to one another.

24. Waveguide device as defined in any of claims 19 to 23, characterized in that the resonator is designed as a resonator symmetrical to the resonator axis (48, 136, 194).

25. Waveguide device as defined in any of claims 19 to 23, characterized in that the resonator is constructed as half of a resonator symmetrical to the resonator axis (48, 136, 194).

26. Waveguide device as defined in any of the preceding claims, characterized in that at least a part of the discharge chamber of the waveguide (88, 168) is penetrated by an amplifier beam path of a laser amplifier (81, 178).

27. Waveguide device as defined in claim 26, characterized in that the amplifier beam path has a transverse expansion (206) extending transversely to an incoming laser beam (208, 210).

28. Waveguide device as defined in claim 26, characterized in that a laser beam (56) coupled into the waveguide passes through the waveguide (88) in the direction of its lengthwise extent (90).

29. Waveguide device as defined in any of claims 26 to 28, characterized in that the laser amplifier (81, 178) has an optical axis extending parallel to the lengthwise extent (90, 170) of the waveguide (88, 168).

**Revendications**

1. Dispositif à guide d'ondes pour un système à laser à gaz excité par haute fréquence et refroidi par diffusion, comprenant un support de guide d'ondes présentant une cavité (24, 80, 82, 112, 162) qui est fermée à la manière d'un anneau dans la direction azimutale (22, 86, 118, 166), par rapport à un axe longitudinal (26, 84, 115, 164), et s'étend en direction de l'axe longitudinal ; et un guide d'ondes qui est logé dans la cavité, guide un rayonnement laser le long d'une étendue longitudinale (58, 90, 116, 170) s'étendant dans la direction de l'axe optique, et est formé par des surfaces de paroi de guide d'ondes (16,18;69,71;109,111;158,160) disposées avec espacement mutuel constant, dont la largeur représente un multiple de leur espacement, et délimitant entre elles une chambre de décharge, caractérisé par le fait que le guide d'ondes (40, 83, 88, 114, 168) est logé, dans la cavité, de façon telle que son étendue longitudinale (58, 90, 116, 170) décrive un angle ≦ 30° avec la direction azimutale (22, 86, 118, 166).

2. Dispositif à guide d'ondes selon la revendication 1, caractérisé par le fait que l'étendue longitudinale (58, 90, 116, 170) décrit un angle ≦ 15° avec la direction azimutale (22, 86, 118, 166).

3. Dispositif à guide d'ondes selon la revendication 2, caractérisé par le fait que l'étendue longitudinale (58, 90, 116, 170) décrit un angle ≦ 5° avec la direction azimutale (22, 86, 118, 166).

4. Dispositif à guide d'ondes selon la revendication 3, caractérisé par le fait que le guide d'ondes (40, 83, 168) est agencé avec une étendue longitudinale (58, 170) sensiblement parallèle à la direction azimutale (22, 86, 166).

5. Dispositif à guide d'ondes selon l'une des revendications 1 à 3, caractérisé par le fait que le guide d'ondes (88, 114) s'enroule spiroïdalement dans la direction de l'axe longitudinal (84, 115).

6. Dispositif à guide d'ondes selon la revendication 5, caractérisé par le fait que des spires successives (91, 119) du guide d'ondes (88, 114) sont intimement rapprochées par leurs arêtes latérales (120, 122) tournées les unes vers les autres.

7. Dispositif à guide d'ondes selon l'une des revendications précédentes, caractérisé par le fait que la cavité (24, 80, 82, 112, 162) est une cavité de type cylindrique.

8. Dispositif à guide d'ondes selon la revendication 7, caractérisé par le fait que la chambre annulaire (24, 80, 82, 112) est une chambre annulaire cylindrique à section circulaire.

9. Dispositif à guide d'ondes selon la revendication 7, caractérisé par le fait que la chambre annulaire (162) est une chambre annulaire cylindrique à section rectangulaire.

10. Dispositif à guide d'ondes selon l'une des revendications précédentes, caractérisé par le fait que la cavité (24 ; 80, 82 ; 112 ; 162) forme, par ses surfaces de paroi, les surfaces de paroi (16, 18 ; 69, 71 ; 109, 111 ; 158, 160) du guide d'ondes.

11. Dispositif à guide d'ondes selon l'une des revendications précédentes, caractérisé par le fait que le guide d'ondes (40, 83, 88, 114, 168) présente une largeur qui est égale, au maximum, à l'étendue des surfaces de paroi (16, 18 ; 68, 70 ; 76, 78 ; 108, 110 ; 158, 160) de la cavité (24, 80, 82, 112, 162) dans la direction de l'axe longitudinal (26, 84, 115, 164).

12. Dispositif à guide d'ondes selon l'une des revendications 1 à 10, caractérisé par le fait que le guide d'ondes (88, 114) présente une largeur qui est égale, au maximum, à une fraction entière de l'étendue des surfaces de paroi (76, 78, 108, 110) de la cavité (82, 112) dans la direction de l'axe longitudinal (84, 115).

13. Dispositif à guide d'ondes selon l'une des revendications précédentes, caractérisé par le fait que le guide d'ondes (40, 83, 88, 114, 168) comprend des électrodes à extension sur toute son étendue longitudinale (58, 90, 116, 170) et sur toute sa largeur.

14. Dispositif à guide d'ondes selon l'une des revendications précédentes, caractérisé par le fait que le support (10, 60, 100, 150) du guide d'ondes comprend une partie extérieure (12, 62, 102, 152) percée d'un évidement (14, 64, 104, 154), et une partie intérieure (16, 66, 74, 106, 156) pouvant être insérée dans cet évidement et pouvant être reliée à la partie extérieure ; et par le fait que la cavité (24, 80, 82, 112, 162) est formée par un espace intercalaire entre la partie intérieure et la partie extérieure considérée.

15. Dispositif à guide d'ondes selon l'une des revendications précédentes, caractérisé par le fait que l'allure du guide d'ondes (88, 114), dans la cavité (82, 112), est établie par un élément optique (87 ; 117).

16. Dispositif à guide d'ondes selon la revendication 15, caractérisé par le fait que l'élément optique englobe un miroir (87) qui préétablit une direction de propagation (116) d'une allure de rayonnement.

17. Dispositif à guide d'ondes selon la revendication 15, caractérisé par le fait que l'élément optique est un élément (117) faisant obstacle à la propagation d'un rayonnement laser.

18. Dispositif à guide d'ondes selon l'une des revendications précédentes, caractérisé par le fait que la chambre de décharge du guide d'ondes (40, 83, 88, 114, 168) est parcourue, au moins en partie, par l'allure du rayonnement d'un résonateur.

19. Dispositif à guide d'ondes selon la revendication 18, caractérisé par le fait que l'allure du rayonnement d'un résonateur est celle d'un résonateur instable à extension transversale (49, 140, 206) s'étendant, à peu près parallèlement aux surfaces de paroi (16, 18 ; 69, 71 ; 109, 111 ; 158, 160) du guide d'ondes, d'un axe de résonance (48, 136, 194) jusqu'à un rayon laser de sortie (56 ; 138 ; 208, 210).

20. Dispositif à guide d'ondes selon la revendication 19, caractérisé par le fait que le résonateur est un résonateur à foyer commun.

21. Dispositif à guide d'ondes selon l'une des revendications 18 à 20, caractérisé par le fait que l'axe de résonance (48, 136, 194) s'étend parallèlement à l'étendue longitudinale (58, 90, 116, 170) du guide d'ondes (40, 83, 88, 114, 168).

22. Dispositif à guide d'ondes selon l'une des revendications 19 à 21, caractérisé par le fait que l'allure du rayonnement du résonateur s'étend, dans la direction transversale (49, 140, 206), au maximum sur la largeur (B) du guide d'ondes (40, 83, 114, 168).

23. Dispositif à guide d'ondes selon l'une des revendications 18 à 22, caractérisé par le fait que l'allure du rayonnement du résonateur présente des rayons extérieurs, s'étendant parallèlement les uns aux autres.

24. Dispositif à guide d'ondes selon l'une des revendications 19 à 23, caractérisé par le fait que le résonateur est réalisé sous la forme d'un résonateur symétrique par rapport à l'axe de résonance (48, 136, 194).

25. Dispositif à guide d'ondes selon l'une des revendications 19 à 23, caractérisé par le fait que le résonateur est structurellement conçu en tant que moitié d'un résonateur symétrique par rapport à l'axe de résonance (48, 136, 194).

26. Dispositif à guide d'ondes selon l'une des revendications précédentes, caractérisé par le fait qu'au moins une partie de la chambre de décharge du guide d'ondes (88, 168) est parcourue par une allure du rayonnement amplificateur d'un amplificateur laser (81, 178).

27. Dispositif à guide d'ondes selon la revendication 26, caractérisé par le fait que l'allure du rayonnement amplificateur présente une extension transversale (206) s'étendant transversalement par rapport à un rayon laser d'entrée (208, 210).

28. Dispositif à guide d'ondes selon la revendication 26, caractérisé par le fait qu'un rayon laser (56), intérieurement modulé dans le guide d'ondes, parcourt ce guide d'ondes (88) dans la direction de son étendue longitudinale (90).

29. Dispositif à guide d'ondes selon l'une des revendications 26 à 28, caractérisé par le fait que l'amplificateur laser (81, 178) présente un axe optique s'étendant parallèlement à l'étendue longitudinale (90, 170) du guide d'ondes (88, 168).

FIG.1

FIG.2

14

12

10

16

20

18

24

26

44 54 42

46

52 50

56

FIG.3

36 48

16

18

12

52

20

54 56

FIG.4

36 48

12

50

20

16

18

FIG.5

FIG.6

FIG.7

FIG.8

FIG.9

*FIG.10*

EP 0 355 758 B1

FIG.11

FIG.12

EP 0 355 758 B1